# EUROPÄISCHE PATENTSCHRIFT

(11) **EP 0 866 547 B1**
(45) Veröffentlichungstag und Bekanntmachung des Hinweises auf die Patenterteilung: **18.06.2003**
(21) Anmeldenummer: 98108754.7
(22) Anmeldetag: 19.09.1995
(51) Int. Cl.: H02P 5/05

(54) **Elektrische Schaltung der Wicklung eines Reluktanzmotors**
Electronic commutation of the winding of a reluctance motor
Commutation électronique de l'enroulement d'un moteur à réluctance variable

(30) Priorität: 22.09.1994 RO 9401551; 25.04.1995 RO 9500800
(43) Veröffentlichungstag der Anmeldung: 23.09.1998
(62) Teilanmeldung aus: 95932980.6
(73) Patentinhaber: Lungu, Iancu, 74381 Bukarest 3 (RO)
(72) Erfinder: Lungu, Iancu, 74381 Bukarest 3 (RO)
(74) Vertreter: Richter, Werdermann, Gerbaulet & Hofmann

(56) Entgegenhaltungen:
- EP-A- 0 506 408
- US-A- 5 214 365
- LE-HUY H ET AL: "A NOVEL UNIPOLAR CONVERTER FOR SWITCHED RELUCTANCE MOTOR" 26.Juni 1989 , PROCEEDINGS OF THE ANNUAL POWER ELECTRONICS SPECIALISTS CONFERENCE (PESC), MILWAUKEE, JUNE 26 - 29, 1989, VOL. VOL. 1, NR. CONF. 20, PAGE(S) 3 - 10 , INSTITUTE OF ELECTRICAL AND ELECTRONICS ENGINEERS XP000044282 * Abbildungen 3,5 *

## Beschreibung

Die Erfindung betrifft einen elektronisch kommutierten Gleichstrommotor mit mindestens zwei in Drehrichtung des Motors zueinander winklig angeordneten, magnetischen Jochen, die Wicklungen tragen, wobei die Entmagnetisierungsenergie, die bei Abschaltung einer der Wicklungen entsteht, wenn diese von der Stromquelle abgeschaltet wird, von den Jochen gegenseitig mit Hilfe von Koppeldioden übertragbar ist, wobei die Selbstinduktionsspannung, die von einer Wicklung stammt, an einer Verbindungsstelle zwischen dieser Wicklung und einem Leistungshalbleiter zur Ansteuerung der Wicklung abgreifbar ist und insbesondere die elektrische Schaltung eines elektronisch kommutierten Gleichstrommotors mit mindestens zwei in Drehrichtung des Motors zueinander winklig angeordneten, magnetisch getrennten Jochen, die Wicklungen tragen, wobei die Entmagnetisierungsenergie, die bei Abschaltung einer der Wicklungen entsteht. wenn diese von der Stromquelle abgeschaltet wird, von den Jochen gegenseitig mit Hilfe von Koppeldioden übertragbar ist.

Das US-Patent Nr. 5,214,365 beschreibt einen elektronisch kommutierten Reluktanzmotor, bei welchem die Entmagnetisierungsenergie einer gerade abgeschalteten Wicklung in einem Kondensator 19 gespeichert wird und nachträglich über getrennte Halbleiterschalter anderen Wicklungen zugeführt wird.

Einen ähnlichen Motor, bei welchem diese Entmagnetisierungsenergie in einem Kondensator gespeichert wird, ist in dem europäischen Patent Nr. 0 506 408 C2 beschrieben.

Eine vergleichbare Anordnung ist auch aus der Veröffentlichung Le-Hey H et al: ,A novel unipolar converter for switched reluctance motor' 26. Juni 1989, proceeding of the annual power electronics specialists conference (pesc), Milwaukee, June 26 - 29, 1989, Vol. Vol. 1, Nr. Conf. 20, page(s) 3 - 10, Institute of electrical and electronics engineers XP000044282.

Alle diese Lösungen weisen den Nachteil auf, daß Kondensatoren beträchtlicher Kapazität und zusätzliche Schaltungsbausteine zur Wiederverwertung der gespeicherten Energie notwendig sind.

Aufgabe der Erfindung ist es, einfache Schaltungen vorzuzeigen, die zum Betrieb des o. g. Motors geeignet sind, wobei die Wiedergewinnung der Entmagnetisierungsenergie der abgeschalteten Phasen ohne Speicherung möglich ist.

Die Aufgabe wird bei einem Motor der eingangs genannten Art mit den in Anspruch 1 angegebenen Merkmalen gelöst.

### Allgemeine theoretische Betrachtungen:

Die erfindungsgemäßen, elektronisch kommutierten Reluktanzmotoren wurde lange Zeit gegenüber den permanentmagneterregten Motoren als unterlegen betrachtet, weil die Magnetisierungsenergie der Joche nicht von Permanentmagneten stammt, sondern jedesmal, wenn die elektromagnetischen Pole die Rotorpole anziehen sollen, auf elektrischem Wege geliefert werden muß. Diese Energie wird nach der Lehre der Erfindung zyklisch zurückgewonnen und dem funktionell nachfolgendem Joch übertragen, weil die Selbstinduktionsspannung Ua, die aus der Entmagnetisierungsenergie eines Joches 11Y stammt, dem nachfolgendem Joch 11X als Vormagnetisierungsenergie übertragen wird. Dadurch wird Energieersparnis (ein hoher Wirkungsgrad) sowie ein schnellerer Anstieg des Magnetflusses in den Jochen erreicht, denen sich Rotorpole nähern, die sich von den gerade abgeschalteten Polen entfernen.

Um die Erfindung besser zu verstehen, wird hier ein Numerierungssystem der Bezugszeichen der Zeichnungen definiert, in dem die Anfangspuchstaben des Bezugszeichens die Untergruppe zeigt, zu der der bezeichnete Gegenstand gehört, der folgenden Konvention nach:
- Die Teile des elektromotorischen Kreises (den der Nutzdrenmoment erzeugt) fangen mit der Ziffer 1 an,
- die Teile des elektrischen Steuerkreises der Motorwicklungen fangen mit der Ziffer 2 an,
- die Teile des Kreises, die zur Ermittlung der Stellung der Rotorpole gegenüber der Pole des elektromagnetischen Erregerkreises dienen, fangen mit der Ziffer 3 an,
- die Teile des Magnetkreises, den der Rotor in einer Anlaufstellung bringt (ist nicht an allen Varianten vorhanden) fangen mit dem Ziffer 4 an.

Alle diese Bestandteile sind im Prinzip in vielen Varianten vom Stand der Technik bekannt und sind Gegenstand der Erfindung nur in dem Maße, in dem sie durch sinvolle Kombinationen mit dem magnetomotorischen Kreis (Eisenjoche und Wicklungen) zusammenwirken, welcher wichtige Neuheitsmerkmale hat.

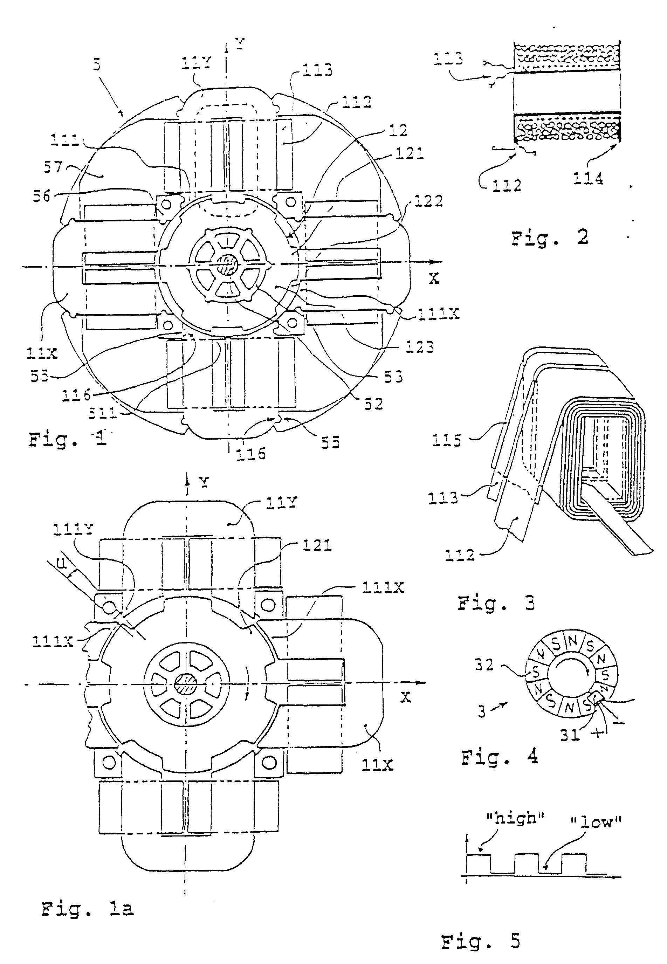

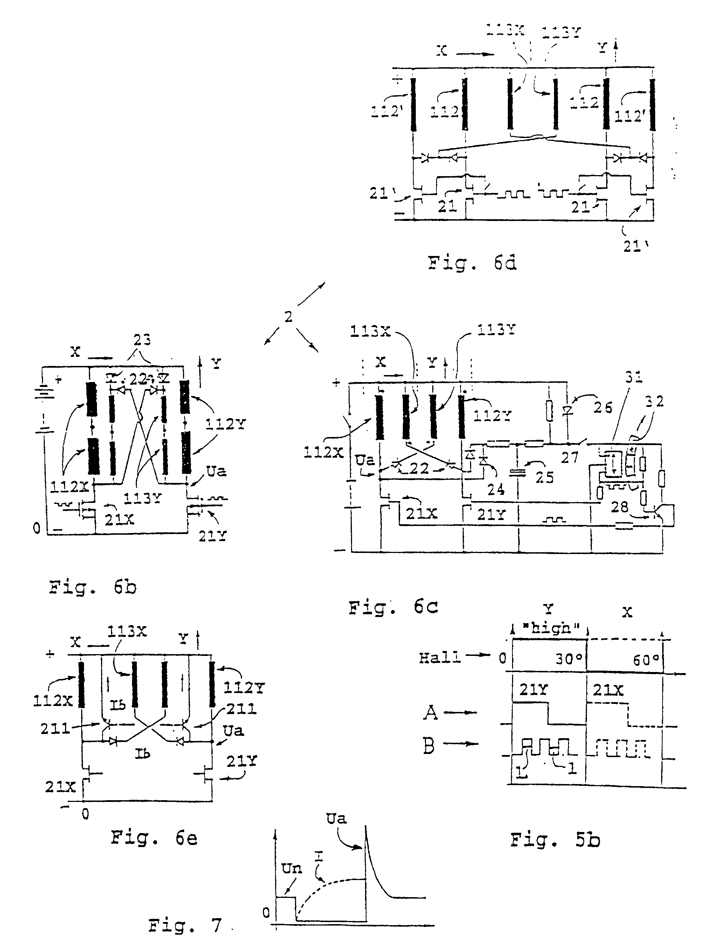

Die Fig. 1 zeigt eine Gesamtansicht eines erfindungsgemäßen Motors als kein einschränkendes Ausführungsbeispiel.

Der magnetische Motorkreis besteht aus 2 waagerechten U-förmigen Magnetjochen 11X und zwei senkrechten Magnetjochen 11Y, wobei die 4 Joche identisch sind.

Jedes Joch hat je zwei Pole 111, die zu dem Rotor gerichtet sind, die die Nord bzw. Süd- Polarität annehmen, wenn durch die Hauptwicklungen 112 oder durch die Nebenwicklungen 113 ein Strom fließt.

Es gibt also acht Pole, die Segmente eines Kreisumfanges darstellen, inmitten dessen der Rotor 12 sich mittig drent.

Dieser hat sechs Pole 121, die durch einen kleinen Luftspalt von den Außenpolen 111 getrennt sind, die eine Fläche haben, die in etwa der Fläche der Pole 111 entspricht, und eine Breite, die mit der Öffnung der zwei Schenkel der Joche 11 in etwa übereinstimmt.

Wie man der Fig. 1 entnehmen kann, wenn vier Rotorpole 121 gegenüber vier Pole 111 der senkrechten Joche 111Y liegen, so befinden sich die übrigen waagerechten Außenpole 111X gegenüber den Pollücken 122 der Rotorpole 121. Die Rotorpole 121 sind untereinander durch ein gemeinsames Rotorjoch 123 verbunden, so daß diese Teile lediglich Ausformungen des Blechpaketes des Rotors 12 sind, welches aus gestanztem elektromagnetischem Blech besteht, das eine runde Form mit Zacken hat.

Diese Teile sind mit Hilfe eines elastischen Teils 53 auf der Motorwelle 52 befestigt.

Auf die U-Joche werden (vorzugsweise vorgefertigte) Wicklungen eingeschoben, wobei jedes Joch mindestens eine Hauptwicklung 112 hat.

Der motorische Magnetkreis 1 besteht also aus der gewickelten Joche 11 mit je zwei Kernen 11X und 11Y, acht Hauptwicklungen 112 und eventuell acht Nebenwicklungen 113, zusammen mit dem Rotor 12.

Wenn man getrennt ein Joch 11 betrachtet und zwei Rotorpole 121, zusammen mit dem Teil des Joches 123, das diese Pole verbindet, und wenn die zwei Wicklungen 112 von Strom durchflossen werden, so entsteht ein Magnetfluß, der der Punktlinie aus Fig.1 entspricht, sodaß dieses Magnetkreis dem eines Schwingmotors aus einen Rasierapparat ähnelt.

Wenn die Rotorpole 121 nicht den Polen 111X der Außenjoche gegenüberliegen (siehe Fig.1), und wenn die Joche 11X feststehen, so werden als Folge des Stromdurchganges die Pole 111X die Rotorpole 122 anziehen, wobei ein Drehmoment entsteht, das den Rotor 12 um ca. 30 Grad dreht.

Damit diese diskreten 30 Grad Bewegungen zu einer kontinuierlichen Drehbewegung werden, ist es notwendig, daß die Stromleitung zu den in Richtung der Achsen X und Y gewickelten Joche in einer entsprechenden Reihenfolge geschieht, welche von dem Rotorpositionserfassungskreis 3 koordiniert wird, und vom elektronischem Steuerkreis 2 in Steuersignale der Wicklungen umgesetzt ist,

Der Rotorpositionserfassungskreis 3, welcher des Abschaltsignal für die Wicklungen der X- Achse bzw. das Einschalssignal für die der Y- Achse nach einer Rotordrehung von 30 Grad liefern soll, besteht nach der Fig. 4 aus einer mehrpoligen Magnetscheibe 32, die sechs Polpaare hat und auf dem Rotor befestigt ist, der sich vor sinem feststehendem Hallsensor 31 bewegt, welcher in seiner Stellung zum Zwecke der Findung eines optimalen Arbeitspunktes, der Leistungsregelung oder zur Drehrichtungsumkehr anpaßbar ist. Wenn die Pole der Magnetscheibe 32 sich hintereinander vor dem Hallsensor 31 (mit digitalem Ausgang) bewegen, so erscheint an dessen Ausgang ein Logiksignal "low" oder "high", je nach der Rotorlage, siehe Fig. 5.

Der Steuerkreis 2 der Wicklungen 112 und 113 besteht hauptsächlich aus zwei Leistungstransistoren (vorzugsweise MOSFET Feldeffekttransistoren) 21X, 21Y, die in Reihe mit den Hauptwicklungen 112X, bzw. 112Y und der dem Motor außenliegenden Stromquelle geschaltet sind, siehe Fig. 6.

Die Wicklungen 112 bzw. 113X (oder Y) , die sich auf gegenüberliegenden Jochen befinden, können in Reihe oder paralell deschaltet werden, je nach dem Spannungspegel, zu dem der Motor arbeitet.

Die Transistoren 21X und 21Y sind im Gegentakt durch eine einfache elektronische Schaltung von dem Rotorstellungserfassungskreis 3 gesteuert, so daß wenn der Ausgang des Hallsensors "high" ist, leitet der Transistor 21X, und der Transistor 21Y leitet, wenn der Ausgang des Hallsensors "low" ist.

Die waagerechten gewickelten Joche 11X bzw. die senkrechten Joche 11Y werden also nacheinander magnetisiert, so daß an den Polen 111 ein Drehfeld erscheint welches den Rotor in Bewegung versetzt.

Die positive Spannung an dem Verbindungspunkt zwischen dem Drain der Transistoren 21X, 21Y und den Wicklungen 112X bzw. 112Y (gegenüber 0 = Minus) ist in Fig. 7 durcn eine durchgezogenee Linie dargestellt; der Strom, welcher durch die Hauptwicklungen 112 fließt hat wegen der Wirkung der Induktivität den Verlauf der Punktlinie aus der Fig. 7. In der Anfangsphase steigt also der Strom langsam, und in ähnlicher Weise der motorisch wirksame Magnetfluß.

Wenn die Wicklung abgeschaltet wird, entsteht innerhalb dieser eine beträchtliche Spannung Ua, die höher liegt als Un = Motornennspannung, die eine verlorene Energie darstellt und zur Zerstörung der Transistoren 21 führen kann. Diese Selbstinduktionsspannung Ua kann in eine nützliche motorische Wirkung umgewandelt werden, falls Sie der Wicklung zugeleitet wird, die gerade eingeschaltet werden soll.

Diesen Nachteil kann man durch die Benutzung von Nebenwicklungen vermeiden, die sich auf den gleichen Jocce 11 befinden, s. Fig. 6 b.

Dis Selbstinduktionsspannung Ua entsteht in der Hauptwicklung 112X (als Quelle) und wird der Nebenwicklungen 113Y der senkrechten Joche als Empfänger zugeleitet.

Mit Hilfe der Selbstinduktionsüberspannung Ua von der Hauptwicklung 112X wird also ein Nutzstrom in den Nebenwicklungen 113Y produziert, also ein Magnetfluß in den Jochen 11Y, auf die diese gewickelt sind.

Gleichzeitig mit der Entstenung des Stromes durch die Nebenwicklung 113Y wird auch die Nennspannung Un der Hauptwicklung 112Y zugeführt, weil, gleichzeitig mit der Sperrung des Transistors 21X der Transistor 21Y leitend wird. Die Wirkung des schnell ansteigenden transienten Stromes in der Nebenwicklung 113Y, welcher recht schnell ansteigt, und die des längerandauernden, jedoch langsamer ansteigenden Stromes durch die Hauptwicklungen 112Y addieren sich, was zu einem schnelleren Anstieg des magnetischen Flußes durch die senkrechten Joche, also zu der Erhöhung der motorischen Wirkung führt.

Der Rotor 12 wird durch die Wiederholung der oben beschriebenen elektromagnetischen Vorgänge in eine kontinuierliche Drehbewegung versetzt, so daß er eine komplette Umdrehung ausführt wenn jedes Jochpaar sechs Steuerimpulse empfängt.

Die Optimierung des Schaltpunktes kann praktisch durch die Verschiebung des Hallsansors 31 gegenüber den Jochen 11 erfolgen.

Die höhere Spannung, die für die Gate-Ansteuerung der Leistungstransistoren 21 notwendig ist, kann durch die Integrierung der Spitzen der Selbstinduktionsspannung Ua gewonnen werden.

Für das bessere Verständnis werden wir mit der Fig.1a anfangen, welche ein vergrößertes Detail der Fig. 1 ist.

Die Fig.1 und 1a werden im Zusammenhang mit der Fig. 6c betrachtet, welche eine Verbesserung und Detaillierung der Fig. 6b darstellt.

Nach Fig. 1. wenn 4 Rotorpole 121 ungefähr mit den Polen 111Y übereinstimmen, werden deren zugeordnete Hauptwicklungen 112Y abgeschaltet, was unmittelbar zum Erscheinen der großen Selbstinduktionsspannung Ua führt, die auf die Nebenwicklungen 113X übertragen wird, wobei die Hauptwicklungen 112X von der Stromquelle gesbeist werden. Die diesen Wicklungen zugeordneten vier Pole 111X werden recht schnell aufmagnetisiert und sind dadurch imstande, die vier Rotorpole 121 anzuziehen, von denen zwei sich gerade von den zwei entsprechenden Pole der abgeschalteten Joche 11Y entfernen.

Die Voraussetzung, damit dies geschieht, ist, daß die spitzwinkligen Extremitäten der Pole 111X sich in der Nähe der entsprechenden Extremitäten der Pole 111Y befinden, weil sonst die Aufmagnetisierung der Pole 111X der horizontalen Joche nicht rechtzeitig eine Anziehungswirkung auf die Rotorpole ausüben könnten, so daß der Strom in den Wicklungen 112X, 113X, steil aber ohne eine nützliche Wirkung ansteigen würde.

Um die Wichtigkeit dieser Tatsachen zu verdeutlichen, wurde in Fig.1a der als Winkel "u" betrachtete Abstand zwischen den Außenecken der Pole 111X und 111Y gegenüber der in Fig. 1 dargestellten verringert.

Dieser Abstand muß je nach den elektromechanischen Parametern des jeweiligen Motors optimiert werden, und er ist mindestens 3-4 mal größer als der Luftspalt zwischen den Jochen 11 und dem Rotor 12, um zu vermeiden, daß durch den direkten Kontakt zwischen den Jochen 11X und 11Y magnetische Verluste entstehen.

Die Fig.6c stellt den vollständigen Schaltplan eines funktionsfähigen Motors dar, wobei die Punkte neben den Wicklungen 112 und 113 deren Anfänge bezeichnen, und 112X z. B. die vier Hauptwicklungen der Joche 11X darstellt, die in Reihe oder paralell geschaltet werden können.

Hier werden lediglich zwei Koppeldioden 22 benötigt, die die Selbstinduktionsspannung Ua zu den Anfängen der Nebenwicklungen 113 weiterleiten. Die Dioden 24 leiten die Spannungsspitzen Ua zum Kondensator 25, der nach dem Anlaufen des Motors mit einer Spannung aufgeladen wird, die höher liegt als die Versorgungsspannung Ubat und die die Versorgung des Steuerkreises der Gate-Elektroden der Transistoren 21Y, 21X gewährleisten Diese Spannung wird von der Zenerdiode 26 begrenzt.

Wenn der Schalter 27 geschlosen ist, wird der Hallsensor 31 unter Strom gesetzt und an dessen digitalem Ausgang, der mit der Gate-Elektrode der Transistoren 21Y verbunden ist, erscheint das Logiksignal "high" oder "low", je nachdem ob sich vor dem Hallensensor ein "Nord"- oder "Süd"- Pol der mehrpdigen Magnetscheibe 32 befindet.

Dieses Logiksignal wird auch dem Signalinversionstransistor 28 appliziert, der der Gate- Elektrode des Transistors 21X das "low" Signal appliziert, wenn an der Gate-Elektrode des Transistors 21Y das Signal "high" vornanden ist. Der Pfeil oberhalb des Hallsensors 31 zeigt, daß dieser gegenüber seinem Träger beweglich ist, damit man dadurch die Phase der Logiksignale, die bei der Drehung der mehrpoligen Magnetscheibe 32 entstehen, ändern kann.

Die Drehzahlregelung des Motors kann auch ohne die Änderung der Phase der Steuersignale durch die Änderung der Versorgungsspannung erfolgen.

Die Drehzahländerung kann auch durch die Änderung des Widerstandes der Transistoren 21, also durch die Regelung der Gate-Spannung erfolgen.

Diese Regelung ist jedoch nachteilig, weil sie ohm' sche Verluste verursacht und die Transistoren belastet und sollte daher nur für kleine leistungen eingesetzt werden.

Eine zwei Stufen-Regelung kann durch die Erhöhung des ohm schen Widerstandes des Motors erfolgen, z. B. durch die Abtrennung einer Hälfte der parallell geschalteten Wicklungen, s. Fig.6d.

Die über die Transistoren 21, 21' paralellgeschalteten Wicklungen 112, 112' werden gleichzeitig gesteuert wenn vom Motor die volle Leistung abverlangt wird. Wird eine Leistungsverringerung erwünscht, so werden die Transistoren 21' nicht mehr angesteuert, und so bleibt die Wicklung 112' außer Betrieb. Der Motor arbeitet also mit höheren Verlusten und einer verminderten Leistung.

Eine vorteilhaftere Variante der weitergehenden Leistungsregelung ist prinzipiell in Anschluß an Fig.6e dargestellt.

In der Steuerschaltung des Motors werden zwei weitere Halbleiterventilbausteine (hier bipolare Transistoren) hinzugefügt, die die Rolle einer Freilaufdiode spielen, welche die Sebstinduktionsspannung der Wicklung, die sie generiert hat, zurückführen, aber diesmal steuerbar sind.

Die Fig.5b zeigt, vom Rotordrehwinkel abhängig die Steuersignale der Transistoren 21 und der Transistoren 211, die die Selbstinduktionsspannung Ua zurückführen.

Auf der Abszisse der Fig. 5b ist das Ausgangssignal des Hallsensors dargestellt, der einem Rotorwinkel von 30° entspricht und der die gleiche Dauer wie der Stromimpuls hat, der der Basis des Transistors 211Y appliziert wird.

Die Dauer der positiven Spannungsimpulse, die der MOSFET- Transistoren 21Y für die Leistungsregelung appliziert werden, ist auf der unteren Abszissen in zwei Varianten dargestellt, wobei diese Dauer nur bei Vollast 30° erreicht.

In der ersten Variante A werden die Transistoren 21 und 211 gleichzeitig leitend, und zwar wenn das Logiksignal am Ausgang des Hallsensors von "low" auf "high" wechselt.

Bei Teillast sperrt der Transistor 21Y bevor der Hallsensor wieder zum Logiksignal "low" schaltet, also bevor der Rotor eine 30° Drenung vollzieht.

Die Sperrung des Transistors 21 kann z.B. durcn das Erreichen eines Grenzwertes des Stromes oder der Drehzahl (der Kommutationsfrequenz) bewirkt werden.

Wenn dies geschieht, wird die Selbstinduktionsspannung Ua nicht sofort der Nebenwicklung 113X zugeleitet, weil der Transistor 211Y diese Spannung zum plus-Anschluß der Versorgungsspannung Ubat führt.

Dadurch wird die Entmagnetisierung der Joche 11Y gebremst, die die Rotorpole 121 weiterhin anziehen.

Wenn der Rotordrehwinkel 30° erreicht ist, d. h. wenn der Basisstrom der Transistoren 211Y aufhört und der Ausgang des Hallsensors 31 den Logikpegel "low" annimmt, hört der Durchgang des Reststromes durch der Transistor 211Y auf, und die Selbstinduktionsspannung Ua wird der Nebenwicklung 113X zugeleitet.

In ännlicher Weise, jedoch bei einem um 30° versetzten Rotorwinkel (z.B 30 -60° anstatt 0-30°) wiederholt sich in Bezug auf die waagerechten Joche 11X, was bei der Y-Achse geschah, die Transistoren 21X und 211X werden also leitend, weil das Logiksignal am Ausgang des Hallsensors "low" anstelle von "hign" wurde.

Durch diese Regelungsart wird also die Steuerung der Transistoren 21X, 21Y rotorwinkelabhängig erreicht mit einem variablen, maximal 30° erreichenden, also keinem festen 30°-Öffnungswinkel, wie bei den ungeregelten Motoren.

Durch diese Variation der Öffnungszeit der Transistoren 21 wird die Energiezufuhr, also die Motorleistung, geregelt.

Nach der in Fig. 5b dargestellten Variante B wird durch die wiederholte Stromleitung der Transistoren 21X, 21Y innerhalb eines 30° Rotorwinkels eine ähnliche Wirkung erzielt.

Dieses wird durch eine Pulsbreitenmodulation (L = Impuls, l = Pause) mit angemessener Frequenz der Steuersignale der Transistoren 21 erreicht.

Die Stromleitungszeiten des Transistors 21Y sind mit einer fettgezeichneten, die des Transistors 21X mit einer gestrichelten Linie dargestellt.

Es ist vorteilhaft, alle elektronischen Bauteile des Motors auf einer Platte so weit wie möglich zu integrieren.

Mit dieser Schaltung ist der Motor funktionsfähig.

### Funktionsweise:

Wenn der Motor an eine Stromquelle mit der Spannung Un angeschlossen ist, so wird die elektronische Schaltung 2 eine Steuerspannung an der Gate-Elektrode einer der Transistoren 21, z.B. an 21Y apolizieren, weil am Ausgang des Hallsensors 31 ein Signalpegel "high" oder "low" vornanden ist. Die Hauptwicklung 112Y wird unter Strom gesetzt und bewegt den Rotor 12 aus der in Fig. 1 dargestellten Ausgangsstellung durch eine 30 Grad Drenung zu einer Stellung in welcher die Pole 111X - 121 übereinstimmen. Es kommt also von der Relativstellung der Pole gegenüber der Y- Achse zu einer ähnlichen Stellung, dies jedoch der Achse X gegenüber. Bevor diese Stellung erreicht wird, ändert der Rotorpositionsensor 3 den Logikpegel am Ausgang des Hallsensors 31, sodaß der Transistor 21X leitend wird, während 21Y sperrt. Die bereits beschriebenen Vorgänge wiederholen sich und der Rotor dreht sich kontinuierlich und vollzieht eine ganze Umdrehung gegenüber der gewickelten Joche 11 nachdem jedes Paar davon (X und Y) sechs Stromimpulse erhalten hat. Das Anhalten bzw. das Anlaufen des Motors kann dadurch erreicht werden, indem die Gate-Anschlüße der Transistoren 21 an der Minusleitung verbunden werden, ohne den Motor von der Spannungsquelle zu trennen. Bei einem digitalen Hallsensor 31 erfolgt die Änderung des logischen Ausgangsignals immer bei dem gleichem Relativwinkel der Rotorpole 21 gegenüber der Pole 111 der Joche 11, wobei diese Stellung als Winkel 0 bezeichnet wird. Im Interesse der Leistungs- bzw. Drehzahlregelung kann es notwendig sein, diesen Winkel z.B. um +/- 5 Grad zu ändern. Dies kann durch die mechanische Änderung der Stellung des Hallsensors oder durch die Beeinflüßung seines Schaltpunktes mit Hilfe eines äußeren Magnetfeldes, welches das wechselnde Magnetfeld der mehrpoligen Magnetscheibe 32 (durch Phasenverschiebung) ändert.

Wenn man einen analogen Hallsensor benutzt, so wird an dessen Ausgang ein Sinussignal anstelle des Rechtecksignals nach Fig. 5. Der Umschaltpunkt kann in diesem Fall beliebig gegenüber Null geändert werden, wenn man einen beliebigen Punkt der Sinuskurve als Schaltspannungspegel für die Auslösung der Kommutierung wählt.

Auch diese Sinuskurve kann, wie vorhin erwähnt, phasenverschoben werden, sodaß es in diesem Fall zwei Möglichkeiten gibt um den Kommutierungswinkel zu beeinflüßen. Die erwähnte Beeinflüssung des Magnetfeldes kann praktisch mit Hilfe einer Wicklung oder eines Permanentmagnetes erreicht werden, die in der Nähe des Hallsensors angebracht werden, wobei durch die Wicklung ein Strom fließt, der nahezu gleichbleibend ist. Die Drehrichtungsumkehr kann durch die Veränderung des Logiksignals aus Fig. 5 erreicht werden, so daß der Transistor 21X leitend wird, wenn das Logiksignal des Hallsensors "high" statt "low" ist, oder durch die Umschaltung zu einem anderen Hallsensor, welcher degenüber dem ersteren winkelverschoben ist.

Bei dieser Motor kann man auch auf den Rotorpositionssensor verzichten; dies bedeutet jedoch, daß mann ein etwas komplizierteres elektronischen Anlauf- und Betriebsprogramm anwenden muß, dem folgenden Prinzip nach:
- vor dem Motorstart werden in den Wicklungen elektrische Signale eingespeist, die abhängig von der Wicklungsinduktivität geändert werden, wobei erstere von der Rotorstellung abhängt, weil diese die Reluktanz (Induktivität) der Magnetkreise der betroffenen Joche bedingt.
- eine elektronische Logik vergleicht diese modifizierten Signale und ermittelt die Rotorstellung daraus, so daß am Ausgang dieser Schaltung ein Steuersignal des Transistors 21X oder 21Y erscheint,
- Die Wicklungen, die in Reihe mit dem leitenden Transistor liegen, werden angesteuert und versetzen den Rotor in Bewegung, der durch Einfluß aufmagnetisiert wird,
- wenn die so aufmagnetisierten Rotorpole sich den Polen der stromlosen Joche nähern, so wird in diese eine Spannung induziert, die von einem Schaltkreis ausgewertet wird, welcher diese Wicklung (Phase) die Nennspannung zuführt, sodaß der Rotor weiter angezogen wird.

Diese letzten Vorgänge wiederholen sich, so daß der Rotor sich drent, als ob er von einem Rotorstellungserkennungssensor gesteuert wäre.

Nach erfolgtem Anlaufen des Motors gibt es auch andere Selbststeuerungsmöglichkeiten der Kommutation, wie z.B. die Abschaltung einer Wicklung, wenn der Strom, der sie durchläuft, einen maximalen oder vorbestimmten Wert überschreitet; wenn ein solcher Wert während des normalen Motorbetriebs erreicht ist, bedeutet dies, daß die Rotorpole 121 von den Polen 111, die zu dieser Wicklung gehören, bereits angezogen wurden.

Die Abschaltung einer Wicklung (z.B. 112X) führt über die elektronische Logik zu der Einschaltung (ggf. nach einer vorbestimmten Verzögerung) der nachfolgenden Wicklung, z.B. 112Y.

Die verkettete zyklische Steuerung der Jochpaare X-Y, X-Y, bzw. R-S-T, R-S-T,...falls drei (oder mehrere) Phasen vorhanden sind, kann also über Rotorstellungssensoren oder abhängig von einen Motorparameter (Strom, induzierte Spannung) gesteuert werden.

Diese zyklische Steuerung kann in manchen Fällen von außen aufgezwungen werden, wobei der Motor mit einer von außen vorbestimmten Drehzahl arbeitet. Die Transistoren 21X, 214 sind in diesen Fall von Signalen gesteuert, die von einem motoräußeren Generator stemmen.

Für diese Art der Steuerung kann die Benutzung eines Asynchronrotors (Käfigläufer) anstelle des unter der Fig. 1 beschriebenen Rotors von Vorteil sein.

Insbesondere bei Motoren für höhere Spannungspegel kann man anstelle der MOSFET- Transistoren 21 auch andere Halbleiter wie Thyristoren, (ggf. über den Gate abschaltbare, also GTO), Bipolartransistoren, u.s.w. verwenden, wobei die elektronische Steuerschaltung 2 wie vom Stand der Technik bekannt, angepaßt wird.

## Patentansprüche

1. Elektronisch kommutierter Gleichstrommotor mit mindestens zwei in Drehrichtung des Motors zueinander winklig angeordneten, magnetischen Jochen (11), die Wicklungen (112, 113) tragen, wobei die Entmagnetisierungsenergie, die bei Abschaltung einer der Wicklungen (112) entsteht, wenn diese von der Stromquelle abgeschaltet wird, von den Jochen (11) gegenseitig mit Hilfe von Koppeldioden (22) übertragbar ist, wobei die Selbstinduktionsspannung (Ua), die von einer Wicklung (112) stammt, an einer Verbindungsstelle zwischen dieser Wicklung und einem Leistungshalbleiter (21) zur Ansteuerung der Wicklung (112) abgreifbar ist, **dadurch gekennzeichnet, daß** auf den Jochen (11) neben den Wicklungen (112) Nebenwicklungen (113) angebracht sind, wobei die Selbstinduktionsspannung (Ua), die in der Wicklung (112) entsteht, welche auf dem ersten Joch (11) angebracht ist, über eine Koppeldiode (22) unmittelbar zu dem Anfang einer auf einem funktionell nachfolgenden Joch (11) angeordneten Nebenwicklung (113) leitbar ist.

2. Motor nach Anspruch 1, **dadurch gekennzeichnet, daß** jeweils nicht mehr als ein Leistungshalbleiterschalter (21) in Reihe mit einer Wicklung (112) geschaltet ist.

3. Motor nach Anspruch 1 oder 2, **dadurch gekennzeichnet, daß** die Selbstinduktionsspannung (Ua) ohne eine zeitliche Verzögerung bewirkende Zwischenspeicherung der Entmagnetisierungsenergie zu einer auf einem funktionell nachfolgenden Joch (11) angeordneten Nebenwicklung (113) leitbar ist.

4. Motor nach Anspruch 3, **dadurch gekennzeichnet, daß** die beim Abschalten eines Leistungshalbleiterschalters (21) entstehende Selbstinduktionsspannung (Ua) während der Zeit, in welcher ein Rotorstellungssensor (31) seinen Logikzustand nicht ändert, mittels weiterer, steuerbarer Halbleiter (211) zu der Hauptwicklung (112), in der sie entstanden ist, zurückführbar ist.

5. Motor nach Anspruch 4, **dadurch gekennzeichnet, daß** die Leistungshalbleiter (21, 211) einer Phase (X, Y) gleichzeitig leitend werden, die Sperrung der weiteren Halbleiter (211) jedoch erst mit der Änderung des Logikzustandes am Ausgang des Rotorstellungssensors (31) erfolgt:

6. Motor nach Anspruch 4 oder 5, **dadurch gekennzeichnet, daß** die zum Ansteuern der Leistungshalbleiter (21) für eine Hauptwicklung (112, 113) erforderliche Spannung höher als die Nennspannung des Motors ist und aus der Selbstinduktionsspannung der Hauptwicklung (112) gewonnen wird.

7. Motor nach Anspruch 6, **dadurch gekennzeichnet, daß** die Spitze der Selbstinduktionsspannung (Ua) in einem Kondensator (25) für die Gewinnung der Steuerungsspannung eines Leistungshalbleiters (21) speicherbar ist.

## Claims

1. An electronically commutated direct current motor with at least two magnetic yokes (11) which are arranged at an angle to one another in the rotational direction of the motor and which carry windings (112, 113), wherein the demagnetisation energy which arises on switching-off one of the windings (112) when this is disconnected from the current source may be transmitted mutually by the yokes (11) with the help of coupling diodes (22), wherein the self-induction voltage (Ua) which originates from one winding (112) for activating the winding (112) may be tapped at a connection location between this winding and a power semiconductor (21), **characterised in that** secondary windings (113) are attached on the yokes (11) next to the windings (112), wherein the self-inductance voltage (Ua) which arises in the winding (112) which is attached to the first yoke (11) is conductable via a coupling diode (22) directly to the beginning of a secondary winding (113) arranged on a functionally subsequent yoke (11).

2. A motor according to claim 1, **characterised in that** in each case not more than one power semiconductor switch (21) is connected in series to a main winding (112).

3. A motor according to claim 1 or 2, **characterised in that** the self inductance voltage (Ua) is conductable to a secondary winding (113) arranged on a functionally subsequent yoke (11) without an intermediate storage of the demagnetisation energy which causes a temporal delay.

4. A motor according to claim 3, **characterised in that** the self inductance voltage (Ua) arising on switching-off a power semiconductor switch (21), during the time in which a rotor position sensor (31) does not change its logic condition, may be led back to the main winding (112) in which it arose by way of further controllable semiconductors (211).

5. A motor according to claim 4, **characterised in that** the power semiconductors (21, 211) of a phase (X,Y) become simultaneously conducting, but the blocking of the further semiconductors (211) is effected only with a change of the logic condition at the output of the rotor position sensor (30).

6. A motor according to claim 4 or 5, **characterised in that** the voltage required for activating the power semiconductor (21) for a main winding (112, 113) is higher than the nominal voltage of the motor and is obtained from the self-inductance voltage of the main winding (112).

7. A motor according to claim 6, **characterised in that** the peak of the self inductance voltage (Ua) may be stored in a capacitor (25) for obtaining the control voltage of a power semiconductor (21).

## Revendications

1. Moteur à courant continu commuté électroniquement avec au moins deux culasses magnétiques (11), placées angulairement l'un par rapport à l'autre dans le sens de rotation du moteur, qui portent des enroulements (112, 113), l'énergie de démagnétisation, qui se développe lors de la mise hors circuit de l'un des enroulements (112) lorsque celui-ci est déconnecté de la source de courant, pouvant être transmise par les culasses (11) de manière interdépendante à l'aide de diodes de couplage (22), la tension d'auto-induction (Ua) qui provient d'un enroulement (112) pouvant être prélevée à un point de jonction entre cet enroulement et un semiconducteur de puissance (21) pour l'excitation de l'enroulement (112), **caractérisé en ce que** des enroulements secondaires (113) sont fixés sur les culasses (11) près des enroulements (112), la tension d'auto-induction (Ua), qui se développe dans l'enroulement (112) qui est fixé sur la première culasse (11), pouvant être dirigée par une diode de couplage (22) directement au début d'un enroulement secondaire (113) placé sur une culasse (11) placée en aval quant au plan fonctionnel.

2. Moteur selon la revendication 1, **caractérisé en ce que** respectivement pas plus d'un semiconducteur de puissance (21) est commuté en série avec un enroulement principal (112).

3. Moteur selon la revendication 1 ou 2, **caractérisé en ce que** la tension d'auto-induction (Ua) peut être dirigée sans stockage intermédiaire de l'énergie de démagnétisation qui provoque une temporisation sur un enroulement secondaire (113) placé sur une culasse (11) placée en aval quant au plan fonctionnel.

4. Moteur selon la revendication 3, **caractérisé en ce que** la tension d'auto-induction (Ua) qui se développe lors de la déconnection d'un commutateur statique de puissance (21) peut être ramenée à l'enroulement principal (112), dans lequel elle s'est développée pendant le temps pendant lequel un détecteur de position de rotor (31) ne change pas son état logique, au moyen d'autres semiconducteurs réglables (211).

5. Moteur selon la revendication 4, **caractérisé en ce que** les semiconducteurs de puissance (21, 211) d'une phase (X, Y) sont conducteurs simultanément, le blocage des autres semiconducteurs (211) n'a cependant lieu qu'avec la variation de l'état logique à la sortie du détecteur de position du rotor (31).

6. Moteur selon la revendication 4 ou 5, **caractérisé en ce que** la tension nécessaire à l'excitation des semiconducteurs de puissance (21) pour un enroulement principal (112, 113) est plus élevée que la tension nominale du moteur et est obtenue à partir de la tension d'auto-induction de l'enroulement principal (112).

7. Moteur selon la revendication 6, **caractérisé en ce que** la pointe de la tension d'auto-induction (Ua) peut être stockée dans un condensateur (25) pour l'obtention de la tension de commande d'un semiconducteur de puissance (21).
